# EUROPÄISCHE PATENTSCHRIFT

(11) **EP 3 608 080 B1**
(45) Veröffentlichungstag und Bekanntmachung des Hinweises auf die Patenterteilung: **11.03.2026**
(21) Anmeldenummer: 18211378.7
(22) Anmeldetag: 10.12.2018
(51) Int. Cl.: B29C 48/00, B29C 48/07, B29C 48/12, B29C 48/11, C08L 27/06, C08L 97/02

(54) **VERBUNDWERKSTOFF, EXTRUDAT UND EXTRUSIONSVERFAHREN**
COMPOSITE MATERIAL, EXTRUDATE AND EXTRUSION METHOD
MATÉRIAU COMPOSITE, EXTRUDAT ET PROCÉDÉ D'EXTRUSION

(30) Priorität: 09.08.2018 DE 102018119427
(43) Veröffentlichungstag der Anmeldung: 12.02.2020
(60) Teilanmeldung: 25211855.9
(73) Patentinhaber: Salamander Industrie-Produkte GmbH, 86842 Türkheim (DE)
(72) Erfinder: BAHNES, Hermann, 26871 Papenburg (DE)
(74) Vertreter: Schmid, Nils T.F.

(56) Entgegenhaltungen:
- WO-A1-2015/063365
- WO-A2-2004/022846
- US-A1- 2006 100 318
- JAN SCHUT: "First Commercial Applications for Three New 'Eco' Fillers", THE PLASTICS ENGINEERING BLOG, 16 September 2010 (2010-09-16), Ridgetown, Canada, pages 1 - 5, XP055597523, Retrieved from the Internet <URL:http://www.omtecinc.ca/docs/news_2010-1.pdf> [retrieved on 20190618]

## Beschreibung

Die vorliegende Erfindung betrifft einen Verbundwerkstoff zum Herstellen eines Extrudats, insbesondere eines Holzimitats. Des Weiteren betrifft die Erfindung ein Extrudat, wie ein Holzimitat, das durch Extrusion eines Verbundwerkstoffs hergestellt ist. Ferner stellt die vorliegende Erfindung ein Verfahren zum Herstellen eines Verbundwerkstoffs sowie ein Extrusionsverfahren zum Herstellen eines Extrudats aus einem Verbundwerkstoff bereit.

Gattungsgemäße Verbundwerkstoffe finden beispielsweise Einsatz in der Profilextrusion zur Herstellung von Profilen für Boden- oder Wandverkleidungen oder Zaunsysteme. Insbesondere werden solche Profile im Outdoorbereich verwendet, sodass eine gewisse Wetter- bzw. Witterungsbeständigkeit als Voraussetzung besteht. Eine weitere Anforderung an die Verbundwerkstoffprofile liegt darin, dass diese im Wesentlichen optisch, haptisch und verarbeitungsspezifisch möglichst ähnlich zu Holzprofilen sind. Aufgrund des zunehmenden Umweltbewusstseins steigt die Nachfrage nach einem ressourcenschonenden Umgang mit nachwachsenden Holzersatzrohstoffen. Bekannt ist es, Holz-Kunststoff-Verbundwerkstoffe, sogenannte WPC-Profile (Wood Plastic Composite), einzusetzen, welche thermoplastisch verarbeitbar sind und aus unterschiedlichen Anteilen von Holz, insbesondere Holzmehl, Kunststoffen sowie Additiven hergestellt werden, wobei meist moderne Verfahren der Kunststofftechnik, wie Extrusion oder Spritzgießen, Anwendung finden.

Die bekannten Profile aus Holz-Kunststoff-Verbundwerkstoffen haben unter anderem den Nachteil, dass diese nicht oder nur mit einem großen Aufwand lackierbar sind. Ein zusätzlicher Nachteil besteht darin, dass der häufig vorkommende Polyethylen-Anteil die Haptik des Profils sehr plastikartig macht, wodurch derartige Profile ungeeignet für die Möbelherstellung sind.

Aus EP 2 536 785 ist eine Zusammensetzung zur Herstellung eines Holzimitats bekannt, die ein Gemisch aus PVC-Harz und Reis- bzw. Erdnussschalenpulver enthält. Bei derartigen Holzimitat-Produkten haben sich wichtige physikalische und/oder mechanische Parameter als verbesserungsfähig erwiesen, insbesondere die Biegefestigkeit, welche nach DIN ISO 178 ermittelt wird, die Schlagzähigkeit, welche nach DIN ISO 179-1eU ermittelt wird, sowie die Wasseraufnahme, welche nach DIN ISO 62 erfasst wird, oder die Rutschfestigkeit. Des Weiteren verlangt die Nachfrage nach Ressourcenschonung regenerativer Rohstoffe nach Alternativen zu der Verwendung von Reisschalen, insbesondere um die Ökobilanz zu verbessern.

WO 2004/022846 A2 offenbart den Oberbegriff des Anspruchs 1 oder ein antimikrobielles Gleitmittel für Holzfaser-Kunststoff-Verbundwerkstoffe. WO 2015/063365 A1 offenbart ein Verfahren zum Herstellen eines Naturfaser-Kunststoff-Verbundstoffs.

Es ist daher Aufgabe der Erfindung, die Nachteile aus dem bekannten Stand der Technik zu überwinden, insbesondere einen Verbundwerkstoff zum Herstellen eines Extrudats, insbesondere eines Holzimitats, beispielsweise für Wand-, Boden- oder Zaunsystemprofile insbesondere im Outdoorbereich, bereitzustellen, der verbesserte physikalische und/oder mechanische Eigenschaften besitzt, der Nachfrage nach Ressourcenschonung regenerativer Rohstoffe gerecht wird und gleichzeitig optisch, haptisch sowie verarbeitungsspezifisch möglichst ähnlich zu Holz ist.

Diese Aufgabe wird durch die Merkmale der Ansprüche 1, 10 und 18 gelöst. Danach ist ein Verbundwerkstoff zum Herstellen eines Extrudats, insbesondere eines durch ein Extrusionsverfahren herstellbaren Holzimitats, bereitgestellt. Beispielsweise kann das Extrudat, insbesondere das Holzimitat, ein Monoextrusionsprofil oder ein Mehrfachextrusionsprofil, insbesondere ein Coextrusionsprofil, sein. Ein Verbundwerkstoff soll vorliegend einen Werkstoff aus zwei oder mehr verbundenen Materialien bezeichnen. Der Verbundwerkstoff umfasst Polyvinylchlorid (PVC), welches Hart- und/oder Weich-PVC sein kann, abhängig von der Art des herzustellenden Extrudats. Werden beispielsweise die Extrudate zur Herstellung von Tür- und/oder Fensterrahmenprofilen, Terrassenbodenprofilen oder Rohren eingesetzt, kommt vorwiegend das Hart-PVC zum Einsatz. Für den Fall, dass das herzustellende Extrudat ein elastisches Verhalten aufweisen soll, wie beispielsweise bei Kabelummantelungen, ist bevorzugt Weich-PVC einzusetzen. Beispielsweise kann das PVC ein PVC-Harz, insbesondere eine PVC-Harz-Suspension, sein.

Der Verbundwerkstoff umfasst ferner ein Granulat aus Getreidestreu. Als Granulat oder granulare Materie werden dabei im Allgemeinen Materialien bezeichnet, die aus Feststoffpartikeln geringer Abmessung zusammengesetzt sind. Als Getreidespreu werden vorzugsweise die beim Dreschen von Getreide abfallenden Bestandteile der jeweiligen Getreidepflanze bezeichnet. Vorzugsweise umfasst das Getreidespreu die Spelze, welche die Blüte schützend umgibt, die Hülse, Granne, Samenhülle und/oder Stängelteile, wobei auch Bestandteile der Frucht bzw. des Samens bzw. der Blüte vorhanden sein können. Beispielweise kann der Verbundwerkstoff granuliertes Getreide bzw. granuliertes Getreidespreu umfassen, wobei Granulieren im Allgemeinen eine Technik betrifft, bei der als Ergebnis Partikel ähnlicher Partikelgrößen vorhanden sind. Durch die erfindungsgemäße Verbundwerkstoffzusammensetzung sind die physikalischen und/oder mechanischen Eigenschaften verbessert, wobei gleichzeitig ein optisch, haptisch und verarbeitungstechnisch möglichst holzähnliches Extrudat, wie ein Holzimitat, hergestellt werden kann. Ferner gewährleistet der erfindungsgemäße Verbundwerkstoff bei dessen Herstellung eine Ressourcenschonung regenerativer Rohstoffe, bei der die Ökobilanz des herzustellenden Extrudats verbessert ist, da die Verfügbarkeit der zu verwendenden Getreidearten in Europa vorhanden und somit eine Beschaffung aus einem nicht-europäischen Markt nicht benötigt ist.

Die vorliegende Erfindung betrifft auch eine Zusammensetzung zur Herstellung eines Holzimitats, wobei die Zusammensetzung ein Gemisch aus PVC, insbesondere PVC-Harz, und Granulat aus Getreidestreu, umfasst, wobei das Getreidstreu Dinkel ist. Aus der Zusammensetzung kann ein Verbundwerkstoff gebildet werden, beispielweise durch Vermischen oder Vermengen der einzelnen Bestandteile. Mittels des Verbundwerkstoffs kann dann durch einen Extrusionsschritt ein Holzimitat, also ein Extrudat, hergestellt werden.

Erfindungsgemäß ist das Granulat ein Mahlgut, das heißt insbesondere mittels einer Getreidemühle gemahlen Erfindungsgemäß ist das Granulat aus Getreidespreu derart gemahlen, dass es eine Partikelgröße, wie Korngröße, im Bereich von 0,05 mm bis 1 mm, vorzugsweise im Bereich von 0,1 mm bis 0,7 mm, vorzugsweise im Bereich von 0,2 mm bis 0,5 mm und insbesondere im Bereich von 0,25 mm bis 0,42 mm, besitzt. Es wurde herausgefunden, dass mittels des zu mahlenden Korngrößenwerts stark auf die physikalischen und mechanischen Eigenschaften des Verbundwerkstoffs Einfluss genommen werden kann. Beispielsweise wurde herausgefunden, dass bei einer höheren Mahlqualität, d. h. bei der Verwendung eines feineren Siebmitteleinsatzes, die Wasseraufnahme des herzustellenden Verbundwerkstoffs reduziert werden kann. Allerdings wurde ebenso festgestellt, dass zu geringe Partikel- bzw. Korngrößen, d. h. insbesondere kleiner als 0,05 mm, 0,1 mm, 0,2 mm oder kleiner als 0,25 mm, das Compoundieren des Getreidespreu-Materials erschweren. Des Weiteren wurde eine schlechtere Verarbeitbarkeit beobachtet, da das Gemisch nach dem Compoundieren zu viskos ist. Eine zu kleine Partikelgröße bedeutet auch, dass die Anzahl an Getreidespreu-Partikeln pro Volumeneinheit in dem Verbundwerkstoff ansteigt, wodurch sich die Optik des aus dem Verbundwerkstoff hergestellten Extrudats verschlechtert, insbesondere die Optik zunehmend von einer holzähnlichen Optik abweicht. Außerdem wurde herausgefunden, dass zu große Partikel- bzw. Korngrößen, insbesondere größer als 1 mm, 0,7 mm, 0,5 mm oder größer als 0,42 mm, sich ebenfalls negativ auf das herzustellende Verbundwerkstoff-Extrudat auswirken können. Beispielsweise kann die Biege-/Bruchfestigkeit abnehmen und die nachträgliche Bearbeitbarkeit, wie beispielsweise ein nachträgliches Schleifen, verschlechtert werden. Vorzugsweise werden bei den erfindungsgemäßen Verbundwerkstoffen größtenteils, insbesondere zu 85 bis 95 %, Getreidespelz-Korngrößen von weniger als 0,315 mm verwendet, vorzugsweise größtenteils, insbesondere zu 75 bis 85 %, Getreidespelz-Korngrößen von weniger als 0,25 mm.

Erfindungsgemäß umfasst das Getreide Dinkel, insbesondere ausschließlich Dinkel.

Gemäß einer weiteren beispielhaften Ausführung des erfindungsgemäßen Verbundwerkstoffs beträgt der Anteil an Getreidespreu am Gesamtgewicht zwischen 10 und 50 Gew.-%. Es wurde herausgefunden, dass mit zunehmendem Getreidespreuanteil an erfindungsgemäßem Getreidespreu am Gesamtgewicht die Wasseraufnahme, welche nach DIN ISO 62 bestimmt wird, ansteigt. Es sei klar, dass die Anforderungen an die Wasseraufnahme vom jeweiligen Einsatz des herzustellenden Extrudats abhängen. Insbesondere für den Einsatz des Extrudats in Boden-, Wandverkleidungs- oder Zaunsystemprofilen, welche im Outdoorbereich eingesetzt und somit wetter- bzw. witterungsbeständig zu gestalten sind, eine geringere Wasseraufnahme von Vorteil ist. Vorzugsweise betrifft der Getreidespreuanteil 15 bis 45 Gew.-% oder 20 bis 40 Gew.-%. In einer bevorzugten Ausführung beträgt der Polyvinylchloridanteil am Gesamtverbundwerkstoffgewicht zwischen 30 und 80 Gew.-%, vorzugsweise zwischen 35 und 75 Gew.-%, insbesondere zwischen 40 und 70 Gew.-%. Es sei klar, dass die Summe sämtlicher vorhandener Verbundwerkstoffkomponenten 100 % nicht übersteigt.

In einer beispielhaften Ausführung des Verbundwerkstoffes umfasst der Verbundwerkstoff außerdem wenigstens ein Additiv, das im Allgemeinen einen Zusatzstoff darstellt, wobei klar ist, dass die Summe der Verbundwerkstoffkomponenten sich zu 100 Gew.-% ergibt. Als Additive kommen beispielsweise chemische Binder auf Thermoplastkunststoffbasis, wie Polymethacrylat, Farbpigmente, wie Kreide, Titandioxyd, Rußschwarz, rotes Eisenoxid, Ocker, Schmier- bzw. Gleitmittel, wie Fettsäuresalze, beispielsweise Calciumstearat, Fettsäureester, Fettsäureamide, Paraffinwachse, Polyethylenwachse, mikrokristallines Paraffin, Calciumcarbonat und Polyvinylchlorid-Verarbeitungshilfsmittel, wie Wärme- und Witterungsstabilisatoren, Antioxidantien, Alterungsschutzmittel, Lichtstabilisatoren, Ultraviolettabsorber oder Antistatikmittel, zum Einsatz. Beispielsweise können die Additive mit dem Verbundwerkstoff, insbesondere mit dem Polyvinylchlorid, vermischt, insbesondere heißgemischt, werden. Gemäß einer Weiterbildung umfasst der erfindungsgemäße Verbundwerkstoff Kreide, wobei insbesondere ein Kreideanteil zwischen 1 bis 25 Gew.-%, 2 bis 23 Gew.-% oder 3 bis 21 Gew.-% beträgt. Ferner kann der Verbundwerkstoff ein Gleitmittel, vorzugsweise mit einem Anteil im Bereich von 1 bis 11 Gew.-%, 2 bis 10 Gew.-% oder 3 bis 9 Gew.-% aufweisen. Als Gleitmittel kann bevorzugt gechlortes Polyethylen eingesetzt werden. Des Weiteren können dem Verbundwerkstoff Farbpigmente beigemischt werden.

In einer beispielhaften Weiterbildung des erfindungsgemäßen Verbundwerkstoffes umfasst der Verbundwerkstoff wenigstens ein Additiv, wie Kreide, Gleitmittel oder Farbpigment, wobei ein Mischungsverhältnis von Getreidespreu zu PVC im Bereich von 0,2 bis 0,85, vorzugsweise im Bereich von 0,35 bis 0,8 oder im Bereich von 0,38 bis 0,77, liegt. Ferner kann ein Mischungsverhältnis von Additiv zu Polyvinylchlorid im Bereich von 0,05 bis 0,5 liegen. Beispielsweise für den Fall, dass Kreide in dem Verbundwerkstoff vorhanden ist, kann ein Mischungsverhältnis von Kreide zu Polyvinylchlorid im Bereich von 0,05 bis 0,5, vorzugsweise im Bereich von 0,06 bis 0,45 oder im Bereich von 0,07 bis 0,4, liegen. Beispielsweise für den Fall, dass Gleitmittel in dem Verbundwerkstoff vorhanden ist, kann ein Mischungsverhältnis von Gleitmittel zu Polyvinylchlorid im Bereich von 0,05 bis 0,3, vorzugsweise im Bereich von 0,06 bis 0,25 oder im Bereich von 0,07 bis 0,2, liegen.

Beispielsweise kann eine Partikel- bzw. Korngröße der Additivkomponenten, insbesondere des Additivs Kreide, kleiner als 5 µm, insbesondere kleiner als 4 µm sein. Dadurch lassen sich eine vorteilhafte Compoundierung der Verbundwerkstoffkomponenten und eine vorteilhafte nachträgliche Bearbeitbarkeit des aus dem Verbundwerkstoff hergestellten Extrudats sicherstellen.

Die erfindungsgemäßen Verbundwerkstoffe und insbesondere die daraus hergestellten Extrudate, welche aufgrund der lokalen Verfügbarkeit der ausgewählten Getreidesorten eine verbesserte Ökobilanz aufweisen, erzielen die in der vorliegenden Erfindung geforderten physikalischen und/oder mechanischen Verbundwerkstoffeigenschaften und besitzen gleichzeitig die Eignung, möglichst gut für Holzimitat-Produkte eingesetzt zu werden. Beispielsweise wurde gemäß der vorliegenden Erfindung herausgefunden, dass die Biegefestigkeit des Verbundwerkstoffs, insbesondere eines aus dem Verbundwerkstoff hergestellten Extrudats, gemessen nach DIN ISO 178 mit einem steigenden Verhältnis von Gleitmittel und/oder Kreide und/oder erfindungsgemäßes Getreidespreu der Gattung Pooideae, Panicoideae bzw. Antropogonoideae zu Polyvinylchlorid abnimmt. Des Weiteren wurde herausgefunden, dass der Biegeelastizitätsmodul, gemessen nach DIN ISO 178, mit steigendem Verhältnis von Getreidespreu Gattung Pooideae, Panicoideae bzw. Antropogonoideae bzw. Kreide zu Polyvinylchlorid zunimmt und zum anderen mit einem steigenden Verhältnis von Gleitmittel zu Polyvinylchlorid stark abnimmt. Außerdem nimmt der Wert der Schlagzähigkeit, gemessen nach DIN ISO 179-1eU, mit steigendem Verhältnis aus Getreidespreu zu Polyvinylchlorid stark ab. Zum anderen stiegt der Wert der Schlagzähigkeit mit zunehmendem Verhältnis von Gleitmittel bzw. Kreide zu Polyvinylchlorid stark an. Eine weitere Erkenntnis betrifft die Dichte des Verbundwerkstoffs, welche mit steigendem Verhältnis aus Kreide zu Polyvinylchlorid stark ansteigt, gemessen nach DIN ISO 1183. Hinsichtlich des insbesondere für den Einsatz des Verbundwerkstoffs, bzw. des daraus hergestellten Extrudats im Outdoorbereich wichtigen Kenngröße der Wasseraufnahme, beispielsweise nach 24 Stunden, wurde entdeckt, dass diese mit steigendem Anteil von Getreidespreu zu Polyvinylchlorid stark zunimmt, gemessen nach DIN ISO 62.

Gemäß einer beispielhaften Weiterbildung des Verbundwerkstoffs ist dem Polyvinylchlorid ein Stabilisator, der vorzugsweise auf einer Calcium-Zink-Basis besteht, beigemischt. Insbesondere ist das Polyvinylchlorid mit dem Stabilisator, vorzugsweise auf Calcium-Zink-Basis, heißgemischt. Bei einer beispielhaften Ausführung erfolgt das Beimischen des Stabilisators mit dem Polyvinylchlorid vor dem Vermischen mit dem Getreidespreu.

In einer beispielhaften Ausführung des erfindungsgemäßen Verbundwerkstoffs ist das Getreidespreu vorzugsweise in eine granulare Form gemahlen, vorzugsweise um das Getreidespreu von der Getreidepflanze zu trennen. Ferner kann das Getreidespreu mittels eines Siebeinsatzes mit einer Maschenweite, die ein Maß für die Gewebefeinheit darstellt und folglich auch die Korngröße von entsprechend gesiebtem Material bestimmt, von insbesondere weniger als 2 mm, vorzugsweise 1,5 mm, 1 mm oder 0,5 mm, klassiert sein, um das Getreidespreu nach definierten Kriterien, wie Partikelgröße, Dichte und/oder Trägheit, ordnen zu können. Ein Sieb bzw. dessen Siebmitteleinsatz ist im Allgemeinen eine Vorrichtung zum Trennen oder Abtrennen von festen Stoffen, wie Schüttgütern, nach Korngröße. Es wurde herausgefunden, dass mit abnehmender Siebeinsatzgröße, d.h. mit abnehmender Partikel- bzw. Korngröße, die Wasseraufnahme des Verbundwerkstoffs reduziert ist.

In einer beispielhaften Weiterbildung des Verbundwerkstoffs besitzt dieser eine Dichte von weniger als 2 g/cm³, vorzugsweise weniger als 1,8 g/cm³, 1,6 g/cm³, insbesondere weniger als 1,5 g/cm³, 1,45 g/cm³ oder weniger als 1,4 g/cm³. Es wurde herausgefunden, dass das spezifische Verbundwerkstoffgewicht bzw. dessen Dichte mit zunehmendem Anteil von Additiven ansteigt.

Gemäß einem weiteren Aspekt der vorliegenden Erfindung, der mit den vorherigen Aspekten kombinierbar ist, ist ein Extrudat bereitgestellt, das durch Extrusion eines erfindungsgemäßen Verbundwerkstoffs hergestellt ist. Dabei können gängige Extrusionsverfahren, bzw. gängige Extrusionsvorrichtungen, wie beispielsweise ein Mehrwellenextruder, insbesondere ein Doppelschneckenextruder, zum Einsatz kommen. Beispielsweise kann der erfindungsgemäße Verbundwerkstoff mittels der folgenden Schritte hergestellt werden. Zunächst sind die einzusetzenden Verbundwerkstoffbestandteile, bzw. deren Rohstoffe zu trocknen und beispielsweise manuell oder maschinell zu mischen, insbesondere um die erfindungsgemäßen Verbundwerkstoffzusammensetzungen mit den erfindungsgemäßen Anteilen der jeweiligen Komponenten zu erhalten. Anschließend erfolgt eine Compoundierung bzw. Aufbereitung des Verbundwerkstoffs ggf. durch Beimischung von Additiven, insbesondere um bevorzugte Eigenschaften des Verbundwerkstoffes zu erzielen, und gegebenenfalls eine Granulierung an einem Extruder. Es ist auch denkbar, das PVC-Zusatzstoff-Gemisch mittels Trockenmischung zu erzeugen, um insbesondere sogenanntes Dry-Blend zu generieren. Die erhaltenen Extrusionsstränge können beispielsweise mittels eines Schneidegranulators zerkleinert werden. Die Extrusion, vorzugsweise Profilextrusion, beispielsweise mittels eines Doppelschneckenextruders wird genutzt, um Extrudate, wie Holzimitate beispielsweise als Extrusionsprofile, mit gewünschten Querschnittflächen, wie beispielsweise 10 x 4 mm², herzustellen.

In einer beispielhaften Ausführung des Extrudats besitzt dieses einem Biegeelastizitätsmodul nach DIN ISO 178 von mehr als 4000 N/mm², vorzugsweise mehr als 4500 N/mm² oder mehr als 5000 N/mm². Der Biegeelastizitätsmodul kann insbesondere weniger als 15.000 N/mm², insbesondere weniger als 12.000 N/mm², 11.000 N/mm², 10.000 N/mm², 9.000 N/mm², 8.000 N/mm², 7.000 N/mm² oder weniger als 6000 N/mm² betragen. Ferner kann eine Biegefestigkeit nach DIN ISO 178 des Extrudats bei mehr als 50 N/mm², vorzugswiese mehr als 55 N/mm², 60 N/mm², oder mehr als 65 N/mm², liegen. Vorzugsweise beträgt die Biegefestigkeit weniger als 100 N/mm², insbesondere weniger als 90 N/mm², 80 N/mm², 75 N/mm² oder 70 N/mm².

Gemäß einer Weiterbildung des erfindungsgemäßen Extrudats weißt dieses einen Zugmodul nach DIN ISO 527 von mehr als 3000 N/mm², vorzugsweise mehr als 3500 N/ mm², auf. Vorzugsweise beträgt der Zugmodul weniger als 10.000 N/mm², insbesondere weniger als 9.000 N/mm², 8.000 N/mm², 7.000 N/mm², 6.000 N/mm², 5000 N/mm² oder weniger als 4.500 N/mm². Des Weiteren kann eine Zugfestigkeit nach DIN ISO 527 des Extrudats mehr als 30 N/ mm², vorzugsweise mehr als 35 N/ mm², betragen. Vorzugsweise beträgt die Zugfestigkeit weniger als 100 N/mm², insbesondere weniger als 90 N/mm², 80 N/mm², 70 N/mm², 60 N/mm², 55 N/mm², 50 N/mm², 45 N/mm² oder weniger als 40 N/mm².

In einer beispielhaften Weiterbildung des erfindungsgemäßen Extrudats besitzt dieses eine Schlagzähigkeit, gemessen nach DIN ISO 179-1eU, von mehr als 6 kJ/ mm², vorzugsweise mehr als 6,5 kJ/ mm², 7 kJ/ mm², 7,5 kJ/ mm², 8 kJ/ mm² oder mehr als 8,5 kJ/ mm². Vorzugsweise beträgt die Schlagzähigkeit weniger als 15N/mm², vorzugsweise weniger als 13 N/mm² oder 11 N/mm².

In einer beispielhaften Ausführung des erfindungsgemäßen Extrudats beträgt bei einer Wasserlagerung des Extrudats beispielsweise von 5 Stunden eine Abmessungsänderung, insbesondere Abmessungsvergrößerung, wie eine Aufquellung, die beispielsweise beim Durchführen eines Kochtests nach DIN EN 1087 zu beobachten ist, in einer Längserstreckung des Extrudats, vorzugsweise in Extrusionsrichtung des Extrudats, weniger als 0,5 %. Des Weiteren kann eine Abmessungsänderung, vorzugweise Abmessungsvergrößerung, in einer zur Längserstreckungsrichtung querliegenden Breitenerstreckungsrichtung weniger als 0,8 % betragen. Des Weiteren kann auch eine Abmessungsänderung, insbesondere Abmessungsvergrößerung, in einer zur Längs- und Breitenerstreckunsgrichtung querliegenden Tiefenrichtung, welche beispielsweise eine Extrudatdicke definiert, weniger als 4,5 % betragen. Aufgrund dieser Werkstoffeigenschaften lassen sich die mittels des erfindungsgemäßen Verbundwerkstoffs hergestellten erfindungsgemäßen Extrudate sehr gut im Outdoorbereich, beispielsweise für Fenster- und/oder Türprofilrahmen, einsetzen, die ein gewisses Maß an Wetter- bzw. Witterungsbeständigkeit aufweisen müssen.

Gemäß einer Weiterbildung der vorliegenden Erfindung ist das Extrudat, insbesondere nach Holzimitat, als Extrusionsprofil ausgebildet. Beispielsweise kann ein Monoextrusionprofil bereitgestellt sein, das einen Getreidespreuanteil im Bereich von 25 bis 50 Gew.-%, vorzugsweise von 30 bis 45 Gew.-%, besitzt.

Des Weiteren kann ein Mehrfachextrusionsprofil, beispielsweise ein Coextrusionsprofil, mit einem Getreidespreuanteil im Bereich von 10 bis 50 Gew.-%, vorzugsweise im Bereich von 15 bis 45 Gew.-%, bereitgestellt sein.

Des Weiteren stellt die vorliegende Erfindung ein Verfahren zum Herstellen eines Verbundwerkstoffs bereit, der beispielsweise durch ein Extrusionsverfahren zu einem Holzimitat weiterverarbeitet werden kann. Bei dem Verfahren wird Polyvinylchlorid, insbesondere PVC-Harz, hergestellt und/oder bereitgestellt. Ferner wird Getreidespreu, wie Spelze, Hülse, Granne, Samenhülle und/oder Stängelteile, hergestellt und/oder bereitgestellt, was beispielsweise durch Dreschen erfolgen kann. Das Getreidespreu kann dann granuliert und/oder gemahlen werden, insbesondere um gewünschte Partikelgrößen zu erhalten. Das Getreidespreu ist dabei aus wenigstens einer der Gattungen Pooideae, Panicoideae bzw. Antropogonoideae ausgewählt. Anschließend wird das Polyvinylchlorid mit dem Getreidespreu vermengt und/oder vermischt. Des Weiteren ist das erfindungsgemäße Herstellungsverfahren derart gekennzeichnet, dass damit ein Verbundwerkstoff gemäß der Unteransprüche hergestellt werden kann. Beispielsweise erfolgt das Vermischen und/oder Vermengen für eine vorbestimmte Zeit, beispielsweise wenigstens zwei Minuten, beispielsweise maximal zehn Minuten, bei einer vorbestimmten Temperatur, beispielsweise im Bereich von 100° bis 180°, insbesondere im Bereich von 120° bis 150°, insbesondere im Bereich von 125° bis 140°. In einer beispielhaften Weiterbildung werden Additive untereinander vermischt und schrecklich oder vermengt, wobei beispielsweise eine Zeit von 10 Minuten zu einer ausreichenden Vermengung und/oder Vermischung führt. Anschließend kann das Additiv-Gemisch zusammen mit dem PVC-Getreidespreu-Gemisch insbesondere homogen durchmischt werden, wobei beispielsweise ein Hochgeschwindigkeitsmischer Anwendung findet, mittels dem über eine vorbestimmte Zeit, beispielsweise wenigstens fünf bis beispielsweise maximal 15 Minuten, eine Durchmischung stattfindet. Beispielsweise kann das dabei entstandene Gemisch für eine vorbestimmte Zeit, beispielsweise 20 Minuten bis beispielsweise 40 Minuten, abgekühlt werden.

Gemäß einem weiteren Aspekt der vorliegenden Erfindung, der mit den vorherigen Aspekten kombinierbar ist, ist ein Extrusionsverfahren zum Herstellen eines erfindungsgemäßen Extrudats, wie eines Holzimitats, bereitgestellt, wobei das Extrudat mittels des erfindungsmäßen Extrusionsverfahrens aus einem erfindungsgemäßen Verbundwerkstoff hergestellt ist. Beispielsweise wird der oben beschriebene Verbundwerkstoff in einem Doppel- bzw. Zwillingsschneckenextruder bei einer vorbestimmten Temperatur, welche in der Regel etwa 20° über der Schmelztemperatur des Verbundwerkstoffs liegt, beispielsweise im Bereich von 100° bis 300°, beispielsweise im Bereich von 130° bis 250°, insbesondere im Bereich von 150° bis 210°, extrudiert.

Zur Verdeutlichung der Vorteile des erfindungsgemäßen Verbundwerkstoffs, insbesondere dessen physikalische und mechanische Eigenschaften, wurden beispielhafte erfindungsgemäße Verbundwerkstoffe hergestellt und mittels Versuchen die Verbundwerkstoffeigenschaften ermittelt. In Tabelle 1 sind die Mischungsverhältnisse sowie die Konzentrationen der Mischungskomponenten in dem jeweiligen Verbundwerkstoff angegeben. Insbesondere sind die Mischungsverhältnisse aus Spelze zu Polyvinylchlorid, Kreide zu Polyvinylchlorid und Gleitmittel zu Polyvinylchlorid angegeben. Für die bevorzugten Verbundwerkstoffe wurde als Getreidespreu Spelzmaterial und als Additiv Kreide verwendet. Erfindungsgemäß ist das Spelzmaterial Dinkel. In Tabelle 2 sind erneut insgesamt 12 beispielhafte Verbundstoffe angegeben, für die die jeweiligen Konzentrationen der Mischungskomponenten aufgeführt sind sowie die jeweils ermittelten mechanischen Kennwerte zum Biege-/Elastizitätsmodul, zur Biegefestigkeit sowie zur Schlagzähigkeit. Tabelle 3 unterschiedet sich von Tabelle 2 dadurch, dass statt der mechanischen Kennwerte die physikalischen Eigenschaften der Verbundwerkstoffe aufgeführt sind, insbesondere deren Dichte, Wasseraufnahme nach 24 Stunden und nach 7 Tagen. In Tabelle 4 sind weitere Versuchsergebnisse zu mechanischen und physikalischen Eigenschaften von mittels der erfindungsgemäßen beispielhaften Verbundwerkstoffe hergestellten Extrudate, welche insbesondere als Decking-Profile eingesetzt werden sollen, aufgeführt.

**Tabelle 1: Mischungsverhältnisse und Konzentrationen der Mischungskomponenten**

| **Beispiel** | **Spelze /PVC** | **Kreide /PVC** | **Gleitmitel/PVC** | **PVC** | **Spelze** | **Kreide** | **Gleitmittel** |
|---|---|---|---|---|---|---|---|
| | | | | **%** | **%** | **%** | **%** |
| 1 | 0.381 | 0.076 | 0.076 | 65.2 | 24.8 | 5.0 | 5.0 |
| 2 | 0.762 | 0.076 | 0.076 | 52.2 | 39.8 | 4.0 | 4.0 |
| 3 | 0.381 | 0.381 | 0.076 | 54.4 | 20.7 | 20.7 | 4.1 |
| 4 | 0.762 | 0.381 | 0.076 | 45.1 | 34.3 | 17.2 | 3.4 |
| 5 | 0.381 | 0.076 | 0.133 | 62.9 | 24.0 | 4.8 | 8.4 |
| 6 | 0.762 | 0.076 | 0.133 | 50.7 | 38.6 | 3.9 | 6.8 |
| 7 | 0.381 | 0.381 | 0.133 | 52.8 | 20.1 | 20.1 | 7.0 |
| 8 | 0.762 | 0.381 | 0.133 | 43.9 | 33.5 | 16.7 | 5.9 |
| 9 | 0.571 | 0.229 | 0.105 | 52.5 | 30.0 | 12.0 | 5.5 |
| 10 | 0.571 | 0.229 | 0.105 | 52.5 | 30.0 | 12.0 | 5.5 |
| 11 | 0.571 | 0.229 | 0.105 | 52.5 | 30.0 | 12.0 | 5.5 |
| 12 | 0.571 | 0.229 | 0.105 | 52.5 | 30.0 | 12.0 | 5.5 |

**Tabelle 2: Konzentrationen der Mischungskomponenten und mechanische Eigenschaften**

| **Beispiel** | **PVC** | **Spelze** | **Kreide** | **Gleitmittel** | **Biege-/ Elastizitätsmodul** | **Biegefestigkeit** | **Schlagzähigkeit** |
|---|---|---|---|---|---|---|---|
| | **%** | **%** | **%** | **%** | **MPa** | **MPa** | **kJ/m²** |
| 1 | 65,2 | 24,8 | 5,0 | 5,0 | 4000 | 68,5 | 12,0 |
| 2 | 52,2 | 39,8 | 4,0 | 4,0 | 5190 | 66,4 | 8,5 |
| 3 | 54,4 | 20,7 | 20,7 | 4,1 | 4590 | 66,4 | 12,8 |
| 4 | 45,1 | 34,3 | 17,2 | 3,4 | 5520 | 67,4 | 9,7 |
| 5 | 62,9 | 24,0 | 4,8 | 8,4 | 3710 | 67,7 | 14,4 |
| 6 | 50,7 | 38,6 | 3,9 | 6,8 | 4770 | 63,3 | 9,4 |
| 7 | 52,8 | 20,1 | 20,1 | 7,0 | 4140 | 60,3 | 14,5 |
| 8 | 43,9 | 33,5 | 16,7 | 5,9 | 5020 | 60,3 | 9,4 |
| 9 | 52,5 | 30,0 | 12,0 | 5,5 | 4740 | 65,9 | 10,7 |
| 10 | 52,5 | 30,0 | 12,0 | 5,5 | 4750 | 66,1 | 10,8 |
| 11 | 52,5 | 30,0 | 12,0 | 5,5 | 4730 | 65,6 | 10,7 |
| 12 | 52,5 | 30,0 | 12,0 | 5,5 | 4650 | 65,2 | 10,5 |

**Tabelle 3: Konzentrationen der Mischungskomponenten und physikalische Eigenschaften**

| **Beispiel** | **PVC** | **Spelze** | **Kreide** | **Gleitmittel** | **Dichte** | **24h** | **7d** |
|---|---|---|---|---|---|---|---|
| | **%** | **%** | **%** | **%** | **g/cm³** | **%** | **%** |
| 1 | 65.2 | 24.8 | 5.0 | 5.0 | 1.3927 | 0.38 | 0.99 |
| 2 | 52.2 | 39.8 | 4.0 | 4.0 | 1.3972 | 0.98 | 2.52 |
| 3 | 54.4 | 20.7 | 20.7 | 4.1 | 1.5080 | 0.37 | 0.91 |
| 4 | 45.1 | 34.3 | 17.2 | 3.4 | 1.4855 | 0.73 | 2.07 |
| 5 | 62.9 | 24.0 | 4.8 | 8.4 | 1.3652 | 0.40 | 1.00 |
| 6 | 50.7 | 38.6 | 3.9 | 6.8 | 1.3980 | 0.88 | 2.25 |
| 7 | 52.8 | 20.1 | 20.1 | 7.0 | 1.4850 | 0.34 | 0.86 |
| 8 | 43.9 | 33.5 | 16.7 | 5.9 | 1.4694 | 0.85 | 2.13 |
| 9 | 52.5 | 30.0 | 12.0 | 5.5 | 1.4466 | 0.60 | 1.47 |
| 10 | 52.5 | 30.0 | 12.0 | 5.5 | 1.4479 | 0.53 | 1.37 |
| 11 | 52.5 | 30.0 | 12.0 | 5.5 | 1.4388 | 0.57 | 1.56 |
| 12 | 52.5 | 30.0 | 12.0 | 5.5 | 1.4459 | 0.47 | 1.44 |

Aus den oben in den Tabellen 1 bis 3 dargestellten beispielhaften erfindungsgemäßen Verbundwerkstoffzusammensetzungen sind die mechanischen und physikalischen Eigenschaften sowie Werte bezüglich der Wasseraufnahme eines erfindungsgemäßen Verbundwerkstoffs bzw. Extrudats ersichtlich, welches aus dem jeweiligen erfindungsgemäßen Verbundwerkstoff hergestellt ist. Beispielsweise ist ersichtlich, dass bei den abgebildeten erfindungsgemä-ßen Extrudaten eine Biegefestigkeit von 60,3 MPa bis 68,5 MPa erzielt wurde. Der Biegeelastizitätsmodul liegt in den vorliegenden Versuchsergebnissen im Bereich von 4000 MPa bis 4520 MPa. Als Schlagzähigkeit wurden Werte im Bereich von 8,5 kJ/mm² bis 14,5 kJ/mm² ermittelt. Die Dichte des jeweiligen Extrudats bzw. des dazugehörigen Verbundwerkstoffs lag im Bereich von 1,365 bis 1,508 g/cm³. Bei einer Wasserlagerung über 24 Stunden nach DIN ISO 62 wurden Wasseraufnahmewerte von stets kleiner als 1 %, insbesondere im Bereich von 0,34 bis 0,98% erzielt. Ferner betrug die Wasseraufnahme nach 7 Tagen Wasserlagerung gemäß DIN ISO 62 weniger als 3%, insbesondere lag sie im Bereich von 0,86 bis 2,52%.

In der nachfolgenden Tabelle 4 sind zu Versuchsbeispielen an erfindungsgemäßen Extrudaten, die beispielsweise Holzimitate und mittels eines erfindungsgemäßen Verbundwerkstoffs hergestellt sind, Werkstoffkennwerte zum Biegeelastizitätsmodul, Biegefestigkeit, Dehnung bei Biegefestigkeit, Schlagzähigkeit, Dichte und Wasseraufnahme nach 24 Stunden Wasserlagerung sowie nach sieben Tagen Wasserlagerung aufgeführt. Aus Tabelle 4 sind insbesondere Zusammenhänge aus der Getreidespelz-Qualität des erfindungsgemäßen Verbundwerkstoffs, d. h. der Korngröße des verwendeten Getreidespelz-Materials bzw. Siebmitteleinsatzgröße, mit welcher die Getreidespelzen gemahlen sind, und den Werkstoffkennwerten ersichtlich. Das Vorhandensein von Additiven, wie beispielsweise von Farbpigmenten, wirkt sich wie ersichtlich nicht negativ auf die mechanischen bzw. physikalischen Eigenschaften des aus dem erfindungsgemäßen Verbundwerkstoff hergestellten Extrudats aus.

**Tabelle 4: Versuchsbeispiele mit unterschiedlichen Getreidespelz-Qualitäten und Werkstoffeigenschaften**

| Versuchsbeispiele | Biegeelastizitätsmodul | | Biegefestigkeit | | Dehnung bei Biegefestigkeit | | Schlagzähigkeit | | Dichte | | Wasseraufnahme 24h | | Wasseraufnahme 7d | |
|---|---|---|---|---|---|---|---|---|---|---|---|---|---|---|
| | E_{f} | Std | s_{fM} | Std | e_{fM} | Std | a_{cU} | Std | r | Std | % | Std | % | Std |
| | MPa | MPa | MPa | MPa | [%] | % | [kJ/m²] | [kJ/m²] | [g/cm³] | [g/cm³] | 24h [%] | % | 7d [%] | % |
| Spelzen 2mm gemahlen | 4470 | 117 | 59,40 | 1,56 | 2,00 | 0,10 | 7,59 | 1,12 | 1,4252 | 0,0077 | 0,97 | 0,12 | 2,11 | 0,14 |
| Spelzen 1mm gemahlen | 5410 | 105 | 62,10 | 1,63 | 1,70 | 0,10 | 5,70 | 0,26 | 1,4858 | 0,0011 | 1,15 | 0,03 | 2,50 | 0,06 |
| 45% Spelzen 1mm gemahlen | 5340 | 80 | 56,00 | 1,24 | 1,40 | 0,06 | 6,10 | 1,02 | 1,4262 | 0,0025 | 1,92 | 0,04 | 4,63 | 0,14 |
| Spelzen 1mm gemahlen plus braunes Pigment | 5300 | 87 | 61,00 | 1,07 | 1,60 | 0,07 | 6,71 | 1,01 | 1,4849 | 0,0045 | 1,14 | 0,07 | 2,59 | 0,08 |
| Spelzen 0,5mm gemahlen plus braunes Pigment | 5410 | 188 | 64,60 | 0,96 | 1,60 | 0,05 | 7,55 | 1,14 | 1,4964 | 0,0041 | 0,75 | 0,12 | 1,99 | 0,14 |

Wie bereits geschrieben wurde, ermöglicht der erfindungsgemäße Verbundwerkstoff besonders vorteilhafte mechanische sowie physikalische Kennwerte, die denen der bislang bekannten Verbundwerkstoffe für Profile für Boden- oder Wandverkleidungen oder Zaunsysteme, insbesondere im Outdoorbereich, überlegen sind. Die mechanischen Kennwerte, wie Biegeelastizitätsmodul, Festigkeit und Schlagzähigkeit, nehmen tendenziell mit feiner gemahlenem Getreide-Spelz zu, während die Wasseraufnahme tendenziell abnimmt. Die Dehnungswerte nehmen tendenziell mit feiner gemahlenem Getreide-Spelz ab, während die gemessenen Dichte-Werte tendenziell zunehmen.

Im Folgenden werden weitere Eigenschaften, Merkmale und Vorteile der Erfindung mittels Beschreibung bevorzugter Ausführungen der Erfindung anhand der beiliegenden Beispielhaften Zeichnung deutlich, in denen zeigen:
- Fig. 1: ein beispielhaftes erfindungsgemäßes Extrusionsprofil in der Schnittansicht;
- Fig. 2: ein weiteres beispielhaftes erfindungsgemäßes Extrusionsprofil in der Schnittansicht; und
- Fig. 3: ein weiteres beispielhaftes erfindungsgemäßes Extrusionsprofil in der Schnittansicht.

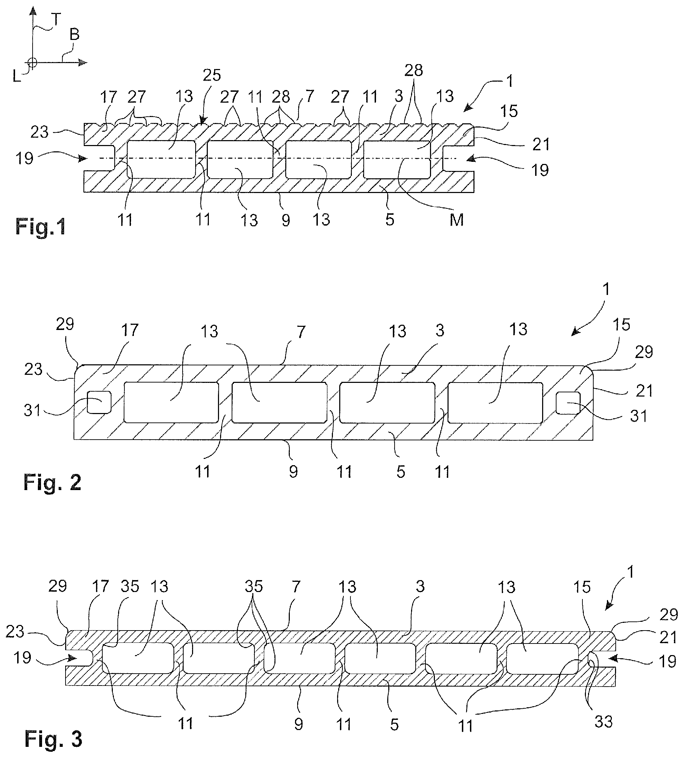

In der nachfolgenden Beschreibung beispielhafter Ausführungen eines erfindungsgemäßen Extrudats, welches mittels eines erfindungsgemäßen Extrusionsverfahrens aus einem erfindungsgemäßen Verbundwerkstoff hergestellt ist, ist das Extrudat im Allgemeinen mit der Bezugsziffer 1 versehen. Bei den dargestellten Extrudaten handelt es sich beispielsweise um Extrusionsprofile, welche mittels eines Doppelschneckenextruders hergestellt sind. Vorzugsweise werden derartige Extrusionsprofile im Outdoorbereich beispielsweise für Terassenböden, Fenster- bzw. Türrahmen eingesetzt. Es sei klar, dass die Extrusionprofile beliebige Abmessungen und beliebige Formen, insbesondere Querschnittflächen, aufweisen können, wobei auf die Rahmenbedingungen des jeweiligen Extrusionsverfahrens und des jeweils verwendeten Verbundwerkstoffs zu berücksichtigen ist. Die Extrusionsprofilbeispiele gemäß der Figuren 1 bis 3 sind in der Schnittansicht dargestellt, wobei eine Längserstreckunsgrichtung L mit einer herstellungsverfahrensbedingten Extrusionsrichtung gleichzusetzen ist und in den Figuren 1 bis 3 in die Zeichenebene orientiert ist. In einer zur Längserstreckungsrichtung L querliegenden Breitenstreckungsrichtung B weisen die beispielhaften Ausführungen der Extrusionsprofile Breitenabmessungen im Bereich von 100 mm bis 250 mm auf, wobei beispielsweise das in Figur 1 abgebildete Extrusionsprofil eine Breite von 125mm, in Figur 2 von 140 mm und in Figur 3 von 200 mm besitzt. In einer zur Längserstreckungsrichtung L und zur Breitenstreckungsrichtung B querliegenden Tiefenrichtung T besitzen die beispielhaften Extrusionsprofile, insbesondere Fassadenprofile, Tiefen- bzw. Höhenabmessungen im Bereich von 5 mm bis 25 mm, wobei beispielsweise Bodenprofile Abmessungen im Bereich von 15 mm bis 25 mm besitzen können. Das Extrusionsprofil aus Figur 1 weist beispielsweise eine Tiefe von etwa 22 mm auf, die Extrusionsprofile gemäß Figur 2 und 3 beispielsweise von etwa 20 mm.

Das Extrusionsprofil 1, welches beispielsweise eine Monoextrusionsprofil sein kann, besitzt einen im Wesentlichen abschnittsweisen doppel-T-förmigen Querschnitt. In Breitenrichtung B erstrecken sich zwei in einem Abstand zueinander angeordnete Profilplatten 3, 5 mit im Wesentlichen konstanten Querschnittsflächen. Beispielsweise bildet eine der Profilplatten 3, 5 eine Extrusionsprofiloberseite 7 und die andere der beiden Profilplatten 5, 3 eine Extrusionsprofilunterseite 9. Die beiden Profilplatten mit 3, 5 miteinanderverbindend sind Profilstege 11 vorgesehen, welche sich in Längserstreckungsrichtung L, vorzugsweise entlang der gesamten Erstreckung des Extrusionsprofils 1 ausbilden. Die Profilstege sind dünnwandig ausgebildet und besitzen Materialstärken im Bereich von 2 bis 5 mm. Die Profilstege 11 sind in Breitenerstreckungsrichtung B des Extrusionsprofils 1 in einem regelmäßigen Abstand zueinander angeordnet, wobei je zwei benachbarte Profilstege 11 zusammen mit den Profilplatten 3, 5 insbesondere deckungsgleiche Freiräume 13 begrenzen. Die Freiräume 13 können beispielsweise zur Gewichtsreduktion und/oder zur Materialeinsparung vorgesehen sein. Des Weiteren können beispielsweise Versteifungselemente in die Freiräume 13 eingebracht sein, um die Stabilität des Extrusionsprofils 1 zu erhöhen. Bei der in Figur 1 dargestellten Ausführungsform sind vier solcher Freiräume 13 nebeneinander angeordnet. An den in Breitenrichtung B betrachteten distalen Endabschnitten 15, 17 besitzen die Profilplatten 3, 5 eine größere Profiltiefe als in den sich zwischen den Endabschnitten 15, 17 erstreckenden Profilplattenbereich. An den Längsseiten 21, 23 besitzt das Extrusionsprofil eine beispielhaft rechteckige Vertiefung 19, die jedoch auch rund, kreisrund bzw. oval ausgebildet sein kann. In die Vertiefungen 19 können beispielsweise formkomplementär ausgebildete Vorsprünge eines weiteren Extrusionsprofils eingeschoben werden, um wenigstens zwei Extrusionsprofile 1 miteinander zu verbinden. Alternativ oder zusätzlich kann die Vertiefung auch als Dichtungsaufnahme für Dichtungselemente (nicht dargestellt) verwendet werden. Das beispielhafte Extrusionprofil 1 ist bezüglich einer Mittelachse M im Wesentlichen symmetrisch ausgebildet. Die an der Oberseite 7 angeordnete Profilplatte 3 unterscheidet sich von der an der Unterseite 9 angeordneten Profilplatte 5 durch eine Oberflächenprofilierung 25, die im Wesentlichen entlang der vollständigen Breiten- und/oder Längenerstreckungsrichtung B, L an dem Extrusionprofil 1 ausgebildet ist. Die Profilierung 25 ist gemäß Figur 1 durch mehrere in einem Abstand zueinander angeordnete beispielsweise in Querschnitt V-förmige Längskerben 27 gebildet, die sich insbesondere im Wesentlichen entlang der vollständigen Längserstreckung des Extrusionprofils 1 ausbilden. Zwischen je zwei benachbarten Längskerben 27 bilden Oberflächenabschnitte 28 die Oberfläche, bzw. die Oberseite 7, des Extrusionsprofils 1. Beispielsweise erstrecken sich auch die Oberflächenabschnitte 28 im Wesentlichen entlang der vollständigen Längserstreckung des Extrusionsprofils 1.

Das in Figur 2 abgebildete beispielhafte Extrusionsprofil 1 unterscheidet sich von dem in Fig. 1 abgebildeten Extrusionsprofil 1 zum einen dadurch, dass es eine größere Breitenstreckung von beispielsweise 140 mm besitzt. Des Weiteren ist die Höhe in Tiefenrichtung T etwas geringer und liegt bei beispielsweise 20 mm. In dem Ausführungsbeispiel gemäß Figur 2 ist weder an der Oberseite 7, noch an der Unterseite 9 eine Profilierung 25 vorgesehen, wobei dies ebenfalls möglich wäre. An der Oberseite 7 geht die Profilplatte 3 über ein abgerundetes Ende 29 in die jeweilige Stirnseite 21, 23 über. Des Weiteren unterscheidet sich das in Figur 2 abgebildete Extrusionsprofil 1 von dem in Figur 1 abgebildeten dadurch, dass keine von au-ßen in Breitenrichtung B betrachtet zugänglichen, Vertiefungen 19 vorgesehen sind, sondern in dem jeweiligen Endabschnitt 15, 17 jeweils ein bezüglich der Freiräume 13 kleiner dimensionierter Freiraum 31 angeordnet ist. Das abgerundete Ende 29 kann beispielsweise mittels eines Radius im Bereich von 2 bis 5 mm, vorzugsweise von 3 mm, ausgebildet sein.

Das beispielhafte in Figur 3 abgebildete Extrusionsprofil 1 unterscheidet sich von dem in Figur 1 abgebildeten Extrusionsprofil 1 dadurch, dass die Breite in Breitenrichtung B größer dimensioniert ist und etwa bei 200 mm liegt und die Tiefe in Tiefenrichtung T etwas kleiner dimensioniert ist und bei etwa 20 mm liegt. Zum Anderen besitzt das Extrusionprofil 1 gemäß Figur 3 sechs in einem Abstand zueinander angeordnete, von jeweils zwei Profilstegen 11 begrenzte Freiräume 13, die im Vergleich zu den Freiräumen 13 gemäß Figur 1 etwas länglicher ausgebildet sind, d.h. sie besitzen verhältnismäßig in Breitenrichtung B eine größere Abmessung als in Tiefenrichtung T. An den jeweiligen Übergängen zwischen einem Profilsteg 11 und der Profilplatte 3 bzw. 5 weisen die Freiräume 13 Rundungen 35 auf, welche beispielsweise mittels Radien im Bereich von 2 bis 5 mm realisiert sein können. Auch die an den Längsseiten 21, 23 vorgesehenen Vertiefungen 19 besitzen innenseitig Rundungen 33, welche ebenfalls beispielsweise mittels eines Radius im Bereich von 2 bis 5 mm realisiert sein können.

Die in der vorstehenden Beschreibung, den Figuren und den Ansprüchen offenbarten Merkmale können sowohl einzeln als auch in beliebiger Kombination für die Realisierung der Erfindung in den verschieden Ausgestaltungen von Bedeutung sein.

### Bezugszeichenliste

- 1: Extrudat
- 3,5: Profilplatte
- 7: Oberseite
- 9: Unterseite
- 11: Profilsteg
- 13: Freiraum
- 15, 17: Endabschnitt
- 19: Vertiefung
- 21, 23: Längsseite
- 25: Profilierung
- 27: Längskerbe
- 28: Oberflächenabschnitt
- 29, 33, 35: Rundung
- 31: Freiraum

- M: Mittellinie
- L: Längserstreckungsrichtung
- B: Breitenerstreckungsrichtung
- T: Tiefenerstreckungsrichtung

## Patentansprüche

1. Verbundwerkstoff zum Herstellen eines Extrudats, umfassend:
- Polyvinylchlorid; und
- Granulat aus Getreidespreu, wie Spelzen, Hülsen, Grannen, Samenhüllen und/oder Stängelteile, **dadurch gekennzeichnet, dass** das Getreidespreu Dinkel ist und dass das Granulat aus Getreidespreu ein Mahlgut ist und derart gemahlen ist, dass es eine Partikelgröße im Bereich von 0,05 mm bis 1 mm aufweist.

2. Verbundwerkstoff nach einem der vorstehenden Ansprüche, wobei der Verbundwerkstoff 10 bis 50 Gew.-%, vorzugsweise 15 bis 45 Gew.-%, vorzugsweise 20 bis 40 Gew.-%, Getreidespreu und 30 bis 80 Gew.-%, vorzugsweise 35 bis 75 Gew.-%, vorzugsweise 40 bis 70 Gew.-%, Polyvinylchlorid umfasst, wobei die Summe der Anteile höchstens 100 Gew.-% beträgt.

3. Verbundwerkstoff nach einem der vorstehenden Ansprüche, wobei der Verbundwerkstoff wenigstens ein Additiv, wie Kreide, vorzugsweise 1 bis 25 Gew.-% oder 2 bis 23 Gew.-% oder 3 bis 21 Gew.-% Kreide, Gleitmittel, vorzugsweise 1 bis 11 Gew.-% oder 2 bis 10 Gew.-% oder 3 bis 9 Gew.-% Gleitmittel, wie gechlortes Polyethylen, oder Farbpigment(e) umfasst, wobei die Summe der Anteile höchstens 100 Gew.-% beträgt.

4. Verbundwerkstoff nach einem der vorstehenden Ansprüche, wobei der Verbundwerkstoff wenigstens ein Additiv, wie Kreide, Gleitmittel oder Farbigment, umfasst, wobei ein Mischungsverhältnis von Getreidespreu zu Polyvinylchlorid im Bereich von 0,2 bis 0,85, vorzugsweise im Bereich von 0,35 bis 0,8 oder von 0,38 bis 0,77, liegt, wobei insbesondere ein Mischungsverhältnis von Additiv zu Polyvinylchlorid im Bereich von 0,05 bis 0,5 liegt, wobei beispielsweise ein Mischungsverhältnis von Kreide zu Polyvinylchlorid im Bereich von 0,05 bis 0,5, vorzugsweise im Bereich von 0,06 bis 0,45 oder im Bereich von 0,07 bis 0,4, oder ein Mischungsverhältnis von Gleitmittel zu Polyvinylchlorid im Bereich von 0,05 bis 0,3, vorzugsweise im Bereich von 0,06 bis 0,25 oder im Bereich von 0,07 bis 0,2, liegt.

5. Verbundwerkstoff nach einem der vorstehenden Ansprüche, wobei dem Polyvinylchlorid ein Stabilisator vorzugsweise auf einer Calcium-Zink-Basis beigemischt ist, wobei insbesondere das Polyvinylchlorid mit dem Stabilisator heißgemischt ist.

6. Verbundwerkstoff nach einem der vorstehenden Ansprüche, wobei das Getreidespreu gemahlen und mittels eines Siebeinsatzes mit einer Maschenweite von insbesondere weniger als 2 mm, vorzugsweise 1,5 mm, 1 mm oder 0,5 mm, klassiert ist, wobei insbesondere mit abnehmender Siebeinsatzgröße eine Wasseraufnahme des Verbundwerkstoffs reduziert ist.

7. Verbundwerkstoff nach einem der vorstehenden Ansprüche, wobei eine Dichte des Verbundwerkstoffs 1,6 g/cm³, 1,5 g/cm³, 1,45 g/cm³ oder weniger als 1,4 g/cm³, beträgt.

8. Verbundwerkstoff nach einem der vorstehenden Ansprüche, wobei das Granulat aus Getreidespreu sand-, pulver- oder puderförmig ausgebildet ist.

9. Verbundwerkstoff nach einem der vorstehenden Ansprüche, wobei das Granulat mittels einer Getreidemühle gemahlen ist.

10. Extrudat (1), das durch Extrusion eines Verbundwerkstoffs nach einem der vorstehenden Ansprüche hergestellt ist.

11. Extrudat (1) nach Anspruch 10, das einen Biegeelastizitätsmodul von mehr als 4.000 N/mm², vorzugsweise mehr als 4.500 N/mm² oder mehr als 5.000 N/mm², und/oder eine Biegefestigkeit von mehr als 50 N/mm², vorzugsweise mehr als 55 N/mm², 60 N/mm² oder mehr als 65 N/mm², aufweist.

12. Extrudat (1) nach Anspruch 10 oder 11, das einen Zugmodul von mehr als 3.000 N/mm², vorzugsweise mehr als 3.500 N/mm², und/oder eine Zugfestigkeit von mehr als 30 N/mm², vorzugsweise mehr als 35 N/mm², aufweist.

13. Extrudat (1) nach einem der Ansprüche 10 bis 12, das eine Schlagzähigkeit von mehr als 6 kJ/m², vorzugsweise mehr als 6,5 kJ/m², 7 kJ/m², 7,5 kJ/m², 8 kJ/m² oder mehr als 8,5 kJ/m², aufweist.

14. Extrudat (1) nach einem der Ansprüche 10 bis 13, das eine Wasseraufnahme nach 24 Stunden Wasserlagerung von weniger als 1,0 %, vorzugsweise weniger als 0,9 %, 0,8 %, 0,7 %, 0,6 %, 0,5 % oder weniger als 0,4 %, aufweist.

15. Extrudat (1) nach einem der Ansprüche 10 bis 14, bei dem bei einer Wasserlagerung beispielsweise von 5 Stunden eine Abmessungsänderung, insbesondere Abmessungsvergrößerung, in einer Längserstreckungsrichtung (L) des Extrudats (1) weniger als 0,5 %, vorzugsweise weniger als 0,4 % oder 0,3 %, und/oder in einer zur Längserstreckungsrichtung (L) querliegenden Breitenerstreckungsrichtung (B) weniger als 0,8 %, vorzugsweise weniger als 0,75 %, 0,7 % oder 0,65 %, und/oder in einer zur Längs- und Breitenerstreckungsrichtung (L, B) querliegenden Tiefenerstreckungsrichtung (T) weniger als 4,5 %, vorzugsweise weniger als 4,0 % oder 3,5 %, beträgt

16. Extrudat (1) nach einem der Ansprüche 10 bis 15, das ein Monoextrusionsprofil ist und einen Getreidespreu-Anteil im Bereich von 25 bis 50 Gew.-%, vorzugsweise im Bereich von 30 bis 45 Gew.-%, besitzt.

17. Extrudat (1) nach einem der Ansprüche 10 bis 16, das ein Mehrfachextrusionsprofil, insbesondere ein Coextrusionsprofil, ist und einen Getreidespreu-Anteil im Bereich von 10 bis 50 Gew.-%, vorzugsweise im Bereich von 15 bis 45 Gew.-%, besitzt.

18. Extrusionsverfahren zum Herstellen eines Extrudats (1) nach einem der Ansprüche 10 bis 17 aus einem Verbundwerkstoff nach einem der Ansprüche 1 bis 9.

## Claims

1. A composite material for producing an extrudate, comprising:
- polyvinyl chloride; and
- granules of cereal chaff, such as husks, hulls, awns, seed casings and/or stalk parts, **characterized in that** the cereal chaff is spelt and that the granules of cereal chaff are ground material and are ground such that they have a particle size in the range of 0.05 mm to 1 mm.

2. Composite material according to one of the preceding claims, wherein the composite material comprises 10 to 50 wt.%, preferably 15 to 45 wt.%, preferably 20 to 40 wt.%, cereal chaff and 30 to 80 wt.%, preferably 35 to 75 wt.%, preferably 40 to 70 wt.%, polyvinyl chloride, wherein the sum of the proportions is at most 100 wt.%.

3. Composite material according to one of the preceding claims, wherein the composite material comprises at least one additive, such as chalk, preferably 1 to 25 wt.% or 2 to 23 wt.% or 3 to 21 wt.% chalk, lubricant, preferably 1 to 11 wt.% or 2 to 10 wt.% or 3 to 9 wt.% lubricant, such as chlorinated polyethylene, or color pigment(s), wherein the sum of the proportions is at most 100 wt.%.

4. Composite material according to one of the preceding claims, wherein the composite material comprises at least one additive, such as chalk, lubricant or colored pigment, wherein a mixing ratio of cereal chaff to polyvinyl chloride is in the range of 0.2 to 0.85, preferably in the range of 0.35 to 0.8 or of 0.38 to 0.77, wherein in particular a mixing ratio of additive to polyvinyl chloride is in the range of 0.05 to 0.5, wherein for example a mixing ratio of chalk to polyvinyl chloride is in the range of 0.05 to 0.5, preferably in the range of 0.06 to 0.45 or in the range of 0.07 to 0.4, or a mixing ratio of lubricant to polyvinyl chloride is in the range of 0.05 to 0.3, preferably in the range of 0.06 to 0.25 or in the range of 0.07 to 0.2.

5. Composite material according to one of the preceding claims, wherein a stabilizer, preferably on a calcium-zinc basis, is added to the polyvinyl chloride, wherein in particular the polyvinyl chloride is hot-mixed with the stabilizer.

6. Composite material according to one of the preceding claims, wherein the cereal chaff is ground and classified by means of a sieve insert with a mesh width of in particular less than 2 mm, preferably 1.5 mm, 1 mm or 0.5 mm, wherein in particular with decreasing sieve insert size a water absorption of the composite material is reduced.

7. Composite material according to one of the preceding claims, wherein a density of the composite material is 1.6 g/cm³, 1.5 g/cm³, 1.45 g/cm³ or less than 1.4 g/cm³.

8. Composite material according to one of the preceding claims, wherein the granules of cereal chaff are in the form of sand, powder, or dust.

9. Composite material according to one of the preceding claims, wherein the granules are ground by means of a cereal mill.

10. An extrudate (1) which is produced by extrusion of a composite material according to one of the preceding claims.

11. The extrudate (1) according to claim 10, which has a flexural elastic modulus of more than 4,000 N/mm², preferably more than 4,500 N/mm² or more than 5,000 N/mm², and/or a flexural strength of more than 50 N/mm², preferably more than 55 N/mm², 60 N/mm² or more than 65 N/mm².

12. The extrudate (1) according to claim 10 or 11, which has a tensile modulus of more than 3,000 N/mm², preferably more than 3,500 N/mm², and/or a tensile strength of more than 30 N/mm², preferably more than 35 N/mm².

13. The extrudate (1) according to one of claims 10 to 12, which has an impact strength of more than 6 kJ/m², preferably more than 6.5 kJ/m², 7 kJ/m², 7.5 kJ/m², 8 kJ/m² or more than 8.5 kJ/m².

14. The extrudate (1) according to one of claims 10 to 13, which has a water absorption after 24 hours of water storage of less than 1.0 %, preferably less than 0.9 %, 0.8 %, 0.7 %, 0.6 %, 0.5 % or less than 0.4 %.

15. The extrudate (1) according to one of claims 10 to 14, in which with a water storage for example of 5 hours a dimensional change, in particular dimensional enlargement, in a longitudinal extension direction (L) of the extrudate (1) is less than 0.5 %, preferably less than 0.4 % or 0.3 %, and/or in a width extension direction (B) transverse to the longitudinal extension direction (L) less than 0.8 %, preferably less than 0.75 %, 0.7 % or 0.65 %, and/or in a depth extension direction (T) transverse to the longitudinal and width extension direction (L, B) less than 4.5 %, preferably less than 4.0 % or 3.5 %.

16. The extrudate (1) according to one of claims 10 to 15, which is a monoextrusion profile and has a cereal chaff fraction in the range from 25 to 50 % by weight, preferably in the range from 30 to 45 % by weight.

17. The extrudate (1) according to one of claims 10 to 16, which is a multiextrusion profile, in particular a coextrusion profile, and has a cereal chaff fraction in the range from 10 to 50 % by weight, preferably in the range from 15 to 45 % by weight.

18. An extrusion method for producing an extrudate (1) according to one of claims 10 to 17 from a composite material according to one of claims 1 to 9.

## Revendications

1. Matériau composite, destiné à fabriquer un extrudat, comprenant :
- un polychlorure de vinyle ; et
- des granulés de balles de céréales, comme des enveloppes, des cosses, des barbes, des follicules et / ou des parties de tiges, **caractérisé en ce que** les balles de céréales sont de l'épeautre et que les granulés de balles de céréales sont un produit moulu et sont moulus de sorte à présenter une taille des particules de l'ordre de 0,05 mm à 1 mm.

2. Matériau composite selon l'une quelconque des revendications précédentes, le matériau composite comprenant de 10 à 50 % en poids, de préférence de 15 à 45 % en poids, de préférence de 20 à 40 % en poids de balles de céréales et de 30 à 80 % en poids, de préférence de 35 à 75 % en poids, de préférence de 40 à 70 % en poids de polychlorure de vinyle, la somme des parts s'élevant au maximum à 100 % en poids.

3. Matériau composite selon l'une quelconque des revendications précédentes, le matériau composite comprenant au moins un additif, comme de la craie, de préférence de 1 à 25 % en poids ou de 2 à 23 % en poids ou de 3 à 21 % en poids de craie, des lubrifiants, de préférence de 1 à 11 % en poids ou de 2 à 10 % en poids ou de 3 à 9 % en poids de lubrifiants, comme un polyéthylène chloré ou un (des) pigment(s) coloré(s), la somme des parts s'élevant au maximum à 100 % en poids.

4. Matériau composite selon l'une quelconque des revendications précédentes, le matériau composite comprenant au moins un additif, comme de la craie, des lubrifiants ou un pigment coloré, un rapport de mélange de balles de céréales au polychlorure de vinyle se situant dans l'ordre de 0,2 à 0,85, de préférence dans l'ordre de 0,35 à 0,8 ou de 0,38 à 0,77, notamment un rapport de mélange d'additif au polychlorure de vinyle se situant dans l'ordre de 0,05 à 0,5, par exemple un rapport de mélange de craie au polychlorure de vinyle se situant dans l'ordre de 0,05 à 0,5, de préférence dans l'ordre de 0,06 à 0,45 ou dans l'ordre de 0,07 à 0,4 ou un rapport de mélange des lubrifiants au polychlorure de vinyle se situant dans l'ordre de 0,05 à 0,3, de préférence dans l'ordre de 0,06 à 0,25 ou dans l'ordre de 0,07 à 0,2.

5. Matériau composite selon l'une quelconque des revendications précédentes, au polychlorure de vinyle étant ajouté un stabilisateur, de préférence sur une base de calcium-zinc, notamment le polychlorure de vinyle étant mélangé à chaud avec le stabilisateur.

6. Matériau composite selon l'une quelconque des revendications précédentes, les balles de céréales étant moulues et classées au moyen d'un insert filtrant d'une largeur de mailles de notamment moins de 2 mm, de préférence de 1,5 mm, de 1 mm ou de 0,5 mm, notamment une absorption d'eau du matériau composite étant réduite au fur et à mesure que l'insert filtrant est de taille décroissante.

7. Matériau composite selon l'une quelconque des revendications précédentes, une densité du matériau composite étant de 1,6 g/cm³, de 1,5 g/cm³, de 1,45 g/cm³ ou inférieure à 1,4 g/cm³.

8. Matériau composite selon l'une quelconque des revendications précédentes, les granulés de balles de céréales étant conçus de forme sableuse, pulvérulente ou poudreuse.

9. Matériau composite selon l'une quelconque des revendications précédentes, les granulés étant moulus au moyen d'un moulin à grains.

10. Extrudat (1), qui est fabriqué par extrusion d'un matériau composite selon l'une quelconque des revendications précédentes.

11. Extrudat (1) selon la revendication 10, qui fait preuve d'un module d'élasticité en flexion de plus de 4.000 N/mm², de préférence de plus de 4.500 N/mm² ou de plus de 5.000 N/mm² et / ou d'une résistance à la flexion de plus de 50 N/mm², de préférence de plus de 55 N/mm², 60 N/mm² ou de plus de 65 N/mm².

12. Extrudat (1) selon la revendication 10 ou 11, qui présente un module de traction de plus de 3.000 N/mm², de préférence de plus de 3.500 N/mm² et / ou une résistance à la traction de plus de 30 N/mm², de préférence de plus de 35 N/mm².

13. Extrudat (1) selon l'une quelconque des revendications 10 à 12, qui fait preuve d'une résistance aux chocs de plus de 6 kJ/m², de préférence de plus de 6,5 kJ/m², 7 kJ/m², 7,5 kJ/m², 8 kJ/m² ou de plus de 8,5 kJ/m².

14. Extrudat (1) selon l'une quelconque des revendications 10 à 13, qui fait preuve d'une absorption d'eau après un stockage dans l'eau de 24 heures de moins de 1,0 %, de préférence de moins de 0,9 %, 0,8 %, 0,7 %, 0,6 %, 0,5 % ou de moins de 0,4 %.

15. Extrudat (1) selon l'une quelconque des revendications 10 à 14, pour lequel, lors d'un stockage dans l'eau de par exemple 5 heures, une variation des dimensions, notamment une augmentation des dimensions dans une direction d'extension en longueur (L) de l'extrudat (1) est de moins de 0,5 %, de préférence de moins de 0,4 % ou 0,3 %, et/ou dans une direction d'extension en largeur (B) située à la transversale de la direction d'extension en longueur (L), est de moins de 0,8 %, de préférence de moins de 0,75 %, 0,7 % ou 0,65 %, et/ou dans une direction d'extension en profondeur (T) située à la transversale de la direction d'extension en longueur et en largeur (L, B), est de moins de 4,5 %, de préférence de moins de 4,0 % ou 3,5 %.

16. Extrudat (1) selon l'une quelconque des revendications 10 à 15, qui est un profilé monoextrudé et qui détient une part de balles de céréales de l'ordre de 25 à 50 % en poids, de préférence de l'ordre de 30 à 45 % en poids.

17. Extrudat (1) selon l'une quelconque des revendications 10 à 16, qui est un profilé multiextrudé, notamment un profilé coextrudé et qui détient une part de balles de céréales de l'ordre de 10 à 50 % en poids, de préférence de l'ordre de 15 à 45 % en poids.

18. Procédé d'extrusion, destiné à fabriquer un extrudat (1) selon l'une quelconque des revendications 10 à 17 en un matériau composite selon l'une quelconque des revendications 1 à 9.
